(19) Europäisches Patentamt
European Patent Office
Office européen des brevets

(11) Veröffentlichungsnummer: **0 339 344 B1**

# (12) EUROPÄISCHE PATENTSCHRIFT

(45) Veröffentlichungstag der Patentschrift: **07.10.92**

(51) Int. Cl.5: **C08F 2/24**, C09D 157/00

(21) Anmeldenummer: **89106264.8**

(22) Anmeldetag: **08.04.89**

## (54) Verfahren zur Herstellung von wässrigen Polymerisatdispersionen, die so erhältlichen Dispersionen und ihre Verwendung zur Herstellung von Beschichtungen.

(30) Priorität: **23.04.88 DE 3813840**

(43) Veröffentlichungstag der Anmeldung:
**02.11.89 Patentblatt 89/44**

(45) Bekanntmachung des Hinweises auf die Patenterteilung:
**07.10.92 Patentblatt 92/41**

(84) Benannte Vertragsstaaten:
**AT BE CH DE ES FR GB IT LI NL SE**

(56) Entgegenhaltungen:
**DE-A- 1 953 349**
**DE-A- 3 441 934**

(73) Patentinhaber: **BAYER AG**
**W-5090 Leverkusen 1 Bayerwerk(DE)**

(72) Erfinder: **Probst, Joachim, Dr.**
**Humperdinckstrasse 42**
**W-5090 Leverkusen 1(DE)**
Erfinder: **Schäfer, Walter, Dr.**
**In den Weiden 25**
**W-5653 Leichlingen(DE)**
Erfinder: **Schuster, Klaus, D.I.**
**Gerhart-Hauptmann- Strasse 33**
**W-5090 Leverkusen 3(DE)**
Erfinder: **Alberts, Heinrich, Dr.**
**Schulstrasse 1 a**
**W-5068 Odenthal(DE)**
Erfinder: **Müller, Hanns Peter, Dr.**
**Weizenfeld 36**
**W-5060 Bergisch-Gladbach 2(DE)**
Erfinder: **Schmidt, Adolf, Dr.**
**Roggendorfstrasse 67**
**W-5000 Koeln 80(DE)**
Erfinder: **Wieczorrek, Wolfhart**
**Egerstrasse 6**
**W-5000 Koeln 90(DE)**

**EP 0 339 344 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung von wäßrigen Dispersionen von Polymerisaten olefinisch ungesättigter Monomerer in Gegenwart von Radikalbildnern und von bestimmten, anionisch modifizierten Polyisocyanat-Additionsprodukten als Emulgatoren, die so erhältlichen Dispersionen und ihre Verwendung zur Herstellung von Beschichtungen.

Es ist aus der DE-OS 3 441 934 (= US-PS 4 619 966) bereits bekannt, Lösungen oder Dispersionen von Polyisocyanat-Additionsprodukten herzustellen, die eingebaute, die Löslichkeit bzw. Dispergierbarkeit in Wasser gewährleistende anionische Struktureinheiten der Formel

$$-NH-CO-\overset{\ominus}{N}-C\equiv N$$

aufweisen. Diese Lösungen oder Dispersionen werden hergestellt, indem man ein organisches Polyisocyanat mit Ammoniumsalzen von Cyanamid zur Reaktion bringt, wobei die Ammoniumsalze als solche eingesetzt werden oder auch in situ durch gleichzeitige Verwendung von Cyanamid und geeigneten Basen hergestellt werden. Bei der Hitzevernetzung von aus diesen Lösungen oder Dispersionen hergestellten Flächengebilden entstehen nach Abspaltung der Base wasser- und lösungsmittelresistente Umsetzungsprodukte bzw. Beschichtungen.

Es zeigte sich jedoch, daß diese Verfahrensweise zur Herstellung von Flächengebilden bzw. von Beschichtungen mit Nachteilen behaftet ist:

- Die Lösungen bzw. Dispersionen neigen zur Schaumbildung;
- In Abhängigkeit von den Klimabedingungen können sich beim Einbrennvorgang "Kochblasen" bilden;
- Zur Herstellung von einwandfrei vernetzten und damit lösungsmittel- und wasserresistenten Filmen sind hohe Einbrenntemperaturen von ca. 180 °C erforderlich.

Wie jetzt überraschend gefunden wurde, ist es möglich, durch Emulsionspolymerisation in wäßrigem Medium von olefinisch ungesättigten Monomeren unter Verwendung der genannten Polyisocyanat-Additionsprodukte als Emulgatoren stabile Dispersionen zu erhalten, die nicht mehr mit den genannten nachteilhaften Eigenschaften behaftet und zur Herstellung von hochwertigen Hitzevernetzbaren Beschichtungen geeignet sind.

Gegenstand der Erfindung ist somit ein Verfahren zur Herstellung von wäßrigen Dispersionen von Polymerisaten durch Polymerisation von olefinisch ungesättigten Monomeren in wäßrigem Medium in Gegenwart von Radikalbildnern und Emulgatoren, dadurch gekennzeichnet, daß man als Emulgatoren Polyisocyanat-Additionsprodukte eines unter 20 000 liegenden Molekulargewichts verwendet, die mehr als 5 und bis 1000 Milliäquivalente pro 100 g Feststoff an eingebauten anionischen Struktureinheiten der Formel

$$-NH-CO-\overset{\ominus}{N}-C\equiv N$$

enthalten.

Gegenstand der Erfindung sind auch die nach diesem Verfahren erhältlichen Dispersionen.

Gegenstand der Erfindung ist schließlich auch die Verwendung der nach diesem Verfahren erhältlichen Dispersionen zur Herstellung von Beschichtungen auf beliebigen Substraten.

Die erfindungswesentlichen, beim erfindungsgemäßen Verfahren als Emulgatoren einzusetzenden Polyisocyanat-Polyadditionsprodukte weisen ein unter 20.000, vorzugsweise bei 500 bis 10 000 liegendes mittleres Molekulargewicht (Zahlenmittel) und einen Gehalt an anionischen Struktureinheiten der genannten Formel von mehr als 5 und bis 1000, vorzugsweise 20 bis 500 und insbesondere 40 bis 400 Milliäquivalenten pro 100 g Feststoff auf.

Zur Herstellung dieser Polyisocyanat-Additionsprodukte geeignete Polyisocyanate sind beispielsweise die in US-PS 4 619 966, Kolonne 2, Zeile 55 bis Kolonne 3, Zeile 42 genannten Verbindungen. Besonders bevorzugt werden die unter (iii) in dem US-Patent genannten NCO-Prepolymeren verwendet. Bei der Herstellung dieser NCO-Prepolymeren werden die beispielhaft genannten Polyisocyanate bzw. beliebige

Gemische dieser Polyisocyanate mit unterschüssigen Mengen der beispielhaft genannten Polyhydroxylverbindungen oder beliebiger Gemische der beispielhaft genannten Polyhydroxylverbindungen, beispielsweise unter Einhaltung eines NCO/OH-Äquivalentverhältnisses von 1,2:1 bis 15:1, vorzugsweise 1,5:1 bis 12:1 zur Reaktion gebracht. Bei den "NCO-Prepolymeren" handelt es sich, wie aus diesem NCO/OH-Äquivalentverhältnis ersichtlich, oftmals um sogenannte "Semiprepolymere", d.h. um Gemische von überschüssigem, nicht umgesetztem Ausgangspolyisocyanat mit echten, Urethangruppen aufweisenden NCO-Prepolymeren. Auch derartige "Semiprepolymere" können bei der Herstellung der erfindungsgemäß zu verwendenden Emulgatoren eingesetzt werden.

Besonders bevorzugt werden bei Verwendung der NCO-Prepolymeren diese so ausgewählt, daß als erfindungsgemäß zu verwendende Emulgatoren Oligourethane resultieren, die pro Molekül mindestens zwei anionische Struktureinheiten der genannten Art und ein mittleres Molekulargewicht von 500 bis 10 000 aufweisen. Unter "Molekulargewicht" ist im Rahmen der Erfindung das aus der Stöchiometrie der Ausgangsmaterialien zur Herstellung der Emulgatoren berechenbare Zahlenmittel des Molekulargewichts zu verstehen.

Grundsätzlich ist es auch möglich, bei der Herstellung der polymeren Emulgatoren ionisch modifizierte Aufbaukomponenten der aus der Chemie der Polyurethandispersionen an sich bekannten Art mitzuverwenden, um zu Polyisocyanat-Additionsprodukten zu gelangen, die außer den erfindungswesentlichen anionischen Struktureinheiten der obengenannten allgemeinen Formel noch eingebaute Carboxylat- oder Sulfonatgruppen aufweisen. Dies wäre beispielsweise dadurch möglich, daß man NCO-Prepolymere einsetzt, die unter Verwendung bzw. Mitverwendung von Carboxylat- oder Sulfonatgruppen aufweisenden mehrwertigen Alkoholen der unter Verwendung der entsprechenden Hydroxycarbonsäuren bzw. Hydroxysulfonsäuren unter anschließender Neutralisation der Säuregruppen hergestellt worden sind. Solche zusätzlichen ionischen Gruppen können zu einer erheblichen Steigerung der Dispergierwirkung und der Stabilisierungswirkung der polymeren Emulgatoren für die olefinisch ungesättigten Monomeren bzw. für die aus ihnen hergestellten Polymeren beitragen. Auch für eine verbesserte Pigmentbenetzbarkeit bzw. -verträglichkeit können solche zusätzlichen ionischen Gruppen förderlich sein.

Es ist weiterhin möglich, bei der Herstellung der erfindungsgemäß zu verwendenden Polyisocyanat-Additionsprodukte organische Polyisocyanate der beispielhaft genannten Art einzusetzen, deren Isocyanatgruppen teilweise mit Blockierungsmitteln für Isocyanatgruppen wie z.B. Phenol, ε-Caprolactam, Malonsäurediethylester, Acetessigsäureethylester oder Oximen wie Cyclohexanonoxim blockiert sind. Falls derartige teilblockierte Polyisocyanate zur Herstellung der Polyisocyanat-Additionsprodukte eingesetzt werden, müssen in diesen jedoch stets noch so viele freie Isocyanatgruppen vorliegen, daß bei der Umsetzung mit den Ammoniumsalzen des Cyanamids noch genug anionische Struktureinheiten der obengenannten Formel entstehen, um die Löslichkeit bzw. Dispergierbarkeit der Polyisocyanat-Additionsprodukte in den Lösungs- bzw. Dispergiermitteln sowie eine genügend gute Emulgierwirkung sowohl für die Mischung der olefinisch ungesättigten Monomeren als auch für die nach der Polymerisation erhaltenen Dispersionen zu gewährleisten. Die bei der Verwendung von teilblockierten Polyisocyanaten resultierenden Polyisocyanat-Additionsprodukte enthalten naturgemäß blockierte Isocyanatgruppen, die zu einer noch stärkeren Hitzevernetzung der Beschichtungen beitragen können. Weiterhin können zur Herstellung der Polyisocyanat-Polyadditionsprodukte anteilig Verbindungen mit zusätzlichen Doppelbindungen im Molekül eingesetzt werden, von denen z.B. Hydroxyalkylester der Methacrylsäure bzw. der Acrylsäure genannt seien: Acrylsäure-2-hydroxypropylester wie er durch Anlagerung von Propylenoxid an die Säure entsteht, Acrylsäure-2-hydroxyethylester, Methacrylsäure-2-hydroxypropylester wie er durch Anlagerung von Propylenoxid an die Säure entsteht oder Methacrylsäure-2-hydroxyethylester; weiterhin Verbindungen wie 1,1-Bis-(allyloxymethyl)-1-hydroxymethyl-propan ("Trimethylolpropandiallylether"), Allylalkohol, Methallylalkohol, 1-Allyloxymethyl-1,1-bis-hydroxymethyl-propan ("Trimethylolpropanmonoallylether"), Allylamin und Methallylamin.

Letztere sind in besonderem Maß geeignet, den Emulgator bei der Durchführung des erfindungsgemäßen Verfahrens an das entstehende Polymerisat kovalent zu binden.

Im allgemeinen weist die Polyisocyanatkomponente, die zur Herstellung der Polyisocyanat-Additionsprodukte eingesetzt wird, einen NCO-Gehalt von 0,1 bis 50, vorzugsweise 4 bis 25 Gew.-% auf.

Zur Herstellung der Emulgatoren werden die Polyisocyanate mit Ammoniumsalzen von Cyanamid zur Reaktion gebracht. Diese Ammoniumsalze können als solche eingesetzt werden oder auch in situ durch gleichzeitige Verwendung von Cyanamid und geeigneten Basen hergestellt werden. Geeignete Ammoniumsalze des Cyanamids sind solche auf Basis von (i) Ammoniak, (ii) primären oder sekundären Aminen mit einem pKb-Wert von minimal 3,1 wie z.B. Methylamin, Dimethylamin, Ethylamin, tert.-Butylamin und (iii) beliebige tert. Amine zie z.B. Trimethylamin, Triethylamin, Tripropylamin, Dimethylaminoethanol, N-Methyldiethanolamin oder Triethanolamin.

Vorzugsweise handelt es sich bei den Aminen um Substanzen, die bei der Hitzebehandlung der beim

erfindungsgemäßen Verfahren erhaltenen Dispersionen verdampfen bzw. verdunsten.

Die Herstellung der Polyisocyanat-Additionsprodukte aus den genannten Ausgangsmaterialien erfolgt im allgemeinen im Temperaturbereich von 0 bis 80, vorzugsweise 5 bis 50 ° C in organischem oder wäßrigem Milieu, vorzugsweise unter Herstellung der Ammoniumsalze in situ in dem jeweiligen Reaktionsgemisch. Die Menge des Cyanamids wird hierbei so bemessen, daß ein Molverhältnis von freien Isocyanatgruppen zu Cyanamid von 0,5:1 bis 1,5:1, vorzugsweise 0,8:1 bis 1,2:1 vorliegt. Die Menge der Base wird so bemessen, daß für jedes Mol an, mit Isocyanatgruppen umzusetzendem Cyanamid mindestens 0,5 Mol, bevorzugt 1 Mol basischer Stickstoffatome zur Verfügung steht. Die Verwendung eines Aminüberschusses ist zwar möglich, jedoch wenig sinnvoll. Die Umsetzung zwischen den Isocyanatgruppen der Polyisocyanatkomponente und den Ammoniumsalzen verläuft nach folgender Gleichung:

$$R(NCO)_n + n\ H_2N{-}C{\equiv}N + nNR'_3 \longrightarrow$$

$$R(NH{-}CO{-}\overset{\ominus}{N}{-}C{\equiv}N)_n + n\overset{\oplus}{H}NR'_3$$

In dieser Gleichung stehen R für den indifferenten Rest des n-funktionellen Polyisocyanats und R′ für Wasserstoff oder den indifferenten organischen Rest der Base.

Die Herstellung der Polyisocyanat-Additionsprodukte kann nach verschiedenen Varianten beispielsweise folgendermaßen erfolgen:

1. Umsetzung eines organischen Polyisocyanats oder eines Gemischs organischer Polyisocyanate der beispielhaft genannten Art in flüssiger oder gelöster Form unter Verwendung eines organischen Lösungsmittels mit einem Gemisch aus Cyanamid und der zum Einsatz gelangenden Base unter anschließendem Auflösen bzw. Dispergieren des gegebenenfalls vom Lösungsmittel befreiten Umsetzungsprodukts in Wasser, gegebenenfalls unter anschließender destillativer Entfernung des Lösungsmittels aus der Lösung bzw. Dispersion. Geeignete Lösungsmittel sind insbesondere mit Wasser mischbare Lösungsmittel wie z.B. Aceton, Methanol, Ethanol, Methylethylketon, N-Methylpyrrolidon oder auch mit Wasser nicht verträgliche Lösungsmittel wie z.B. Ethylacetat, n-Butanol oder Toluol. Im Falle der Mitverwendung derartiger, mit Wasser nicht mischbarer Lösungsmittel, muß deren Menge jedoch so begrenzt werden, daß homogene Lösungen oder Dispersionen der Polyisocyanat-Additionsprodukte vorliegen.
2. Vermischen eines organischen Polyisocyanats oder eines Gemischs organischer Polyisocyanate der in US-PS 4 619 966 unter (i) oder (ii) beispielhaft genannten Art mit einer unterschüssigen Menge einer Polyhydroxylverbindung der in US-PS 4 619 966 unter (iii) beispielhaft genannten Art oder eines Gemisches verschiedener derartiger Verbindungen, Cyanamid und Base, gegebenenfalls in Gegenwart eines inerten Lösungsmittels der oben beispielhaft genannten Art und Herstellung sowohl des NCO-Prepolymeren als auch des Ammoniumsalzes aus Cyanamid und Base in situ, sowie deren weitere Umsetzung in einem Eintopf-Verfahren unter weiterer Aufarbeitung des Reaktionsansatzes so wie unter 1. beschrieben.
3. Zugabe eines gegebenenfalls in einem inerten Lösungsmittel der beispielhaft genannten Art gelösten Polyisocyanats oder Polyisocyanatgemischs zu einer wäßrigen Lösung des Ammoniumsalzes des Cyanamids, gegebenenfalls unter anschließender destillativer Entfernung des Hilfslösungsmittels.

Die oben bei der Auflistung der geeigneten Lösungsmittel ebenfalls erwähnten Alkohole können selbstverständlich nicht als Lösungsmittel für die Polyisocyanat-Komponente sondern lediglich als Lösungsmittel für das Cyanamid und die Base, d.h. das Ammoniumsalz des Cyanamids verwendet werden. Falls derartige Lösungen in alkoholischen Lösungsmitteln mit den Polyisocyanaten umgesetzt werden, stören die alkoholischen Hydroxylgruppen nicht, da die Salze des Cyanamids weit schneller mit den Isocyanaten abreagieren als die alkoholischen Hydroxylgruppen des Lösungsmittels.

In allen genannten Fällen entstehen Lösungen oder Dispersionen der Polyisocyanat-Additionsprodukte in dem wäßrigen bzw. wäßrig-organischen Lösungs- bzw. Dispergiermittel. Die Frage, ob es sich hierbei um Lösungen oder Dispersionen handelt, hängt sowohl vom Molekulargewicht des eingesetzten Polyisocyanats als auch vom Gehalt der Umsetzungsprodukte an anionischen Gruppen ab. Der Feststoffgehalt der Lösungen bzw. Dispersionen liegt im allgemeinen bei 5 bis 95, vorzugsweise 20 bis 80 Gew.-%.

Das erfindungsgemäße Verfahren, d.h. die Polymerisation der olefinisch ungesättigten Monomeren erfolgt nach den üblichen Methoden der Emulsionspolymerisation in Gegenwart der oben beschriebenen

Polyisocyanat-Additionsprodukte, wobei diese in Form der bei ihrer Herstellung anfallenden wäßrigen Lösungen oder Dispersionen verwendet werden können. Das Gewichtsverhältnis von olefinisch ungesättigten Monomeren zu erfindungswesentlichen Emulgatoren liegt bei der Durchführung des erfindungsgemäßen Verfahrens bei 0,1:1 bis 20:1, vorzugsweise 0,5:1 bis 10:1, besonders bevorzugt bei 0,5:1 bis 4:1.

Als olefinisch ungesättigte Monomere seien beispielhaft genannt:

a) $\alpha,\beta$-olefinisch ungesättigte Monocarbonsäuren mit 3 bis 5 C-Atomen und deren Ester bzw. Nitrile und Amide wie Acryl-, Methacryl- und Crotonsäure. Acryl- und Methacrylsäureamide, Acryl- und Methacrylnitril, Ester der Acryl- und Methacrylsäure, insbesondere solche mit gesättigten einwertigen aliphatischen oder cycloaliphatischen Alkoholen mit 1 bis 20 Kohlenstoffatomen, wie Ester der genannten Säuren mit Methyl-, Ethyl-, Propyl-, Isopropyl, n-Butyl-, Isobutyl-, Hexyl-, 2-Ethylhexyl-, Octyl-, Stearylalkohol, Cyclohexanol, Methylcyclohexanol, ferner mit Benzylalkohol, Phenol, Kresol, Furfurylalkohol. Monoester von $\alpha,\beta$-monoolefinisch ungesättigten Monocarbonsäuren mit 3 bis 4 C-Atomen mit zweiwertigen gesättigten aliphatischen Alkoholen mit 2 bis 4 C-Atomen, wie beispielsweise 2-Hydroxyethylmethacrylat, 2-Hydroxypropylmethacrylat, 4-Hydroxybutylmethacrylat, 2-Hydroxyethylacrylat, 2-Jydroxypropylacrylat, 4-Hydroxybutylacrylat; Glycidylester der Acryl- und Methacrylsäure, wie Glycidyl(meth)acrylat; Aminoalkylester und Aminoalkylamide der Acryl- und Methacrylsäure, wie 2-Aminoethyl(meth)acrylhydrochlorid, N,N-Dimethylaminoethyl-(meth)acrylat, N,N-Dimethylaminopropylacrylamid.

Auch Monomere mit zwei oder mehr Doppelbindungen im Molekül können eingesetzt werden. Hiermit können dann hochverzweigte bzw. vernetzte Polymerpartikel, sogenannte Mikrogele, erhalten werden. Als solche Monomere sind z. B. Ethylenglykoldiacrylat oder - methacrylat geeignet.

b) $\alpha,\beta$-olefinisch ungesättigte Dicarbonsäuren mit 3 bis 5 C-Atomen und ihre Derivate, wie Fumarsäure, Maleinsäure, Itaconsäure, Mono- und Diester der vorgenannten Dicarbonsäuren mit 1 bis 18 C-Atomen im Alkoholrest, wie Maleinsäuredimethylester, Maleinsäurediethylester, Maleinsäuredibutylester, Maleinsäuremonohexylester, Maleinsäuremonocyclohexylester.

c) Mono- und Diester des Vinylalkohols mit Carbonsäuren oder mit Halogenwasserstoffsäuren, Vinylether, Vinylketone, Vinylamide, wie Vinylacetat, Vinylpropionat, Vinyllaurat, Vinylstearat, Vinylbenzoat, Chlorvinylacetat, Divinyladipat, Vinylchlorid, Vinylidenchlorid, Vinylethylether, Vinylbutylether, Vinylethyl- oder Vinylisobutylether, Vinylethylketon, Vinylformamid, N-Vinylacetamid.

d) Vinylverbindungen von Aromaten und Heterocyclen, wie Styrol, $\alpha$-Methylstyrol, Vinyltoluol, p-Chlorstyrol, Divinylbenzol, 1-Vinylpyrrolidon, 2-Vinylpyridin.

e) N-Methylolether des Acrylsäure- und Methacrylsäureamids gemäß der allgemeinen Formel I

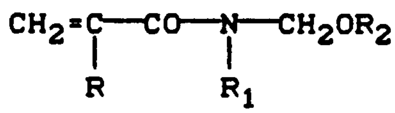

(I)

in der R für Wasserstoff oder Methyl, $R_1$ für Wasserstoff, Alkyl, Aralkyl oder Aryl, $R_2$ für Alkyl oder Cycloalkyl, wie z. B. Methyl, Ethyl, n-Propyl, Isopropyl, n-Butyl, Isobutyl, Cyclohexyl stehen (vergl. DE-B-1 035 363), ferner die nicht veretherten N-Methylolverbindungen des Acryl- und Methacrylsäureamids.

f) Mannich-Basen des Acrylsäure- und Methacrylsäureamids gemäß der allgemeinen Formel II

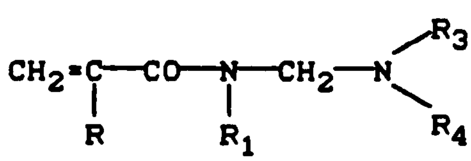

(II)

in der R und $R_1$ die gleiche Bedeutung wie in der Formel I haben und $R_3$ und $R_4$ für Alkyl, Cycloalkyl oder gemeinsam für einen heterocyclischen Rest, wie den Morpholinrest, stehen. Geeignete Verbindungen dieses Typs sind in der DE-B-1 102 404 genannt.

g) Acryl- und Methacrylsäurederivate mit einer endständigen Halogenmethylcarbonylgruppe der allgemeinen Formel III

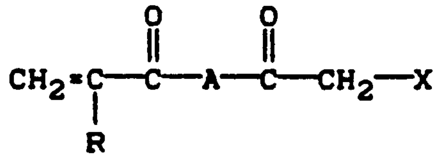 (III)

R = H, $CH_3$

A = 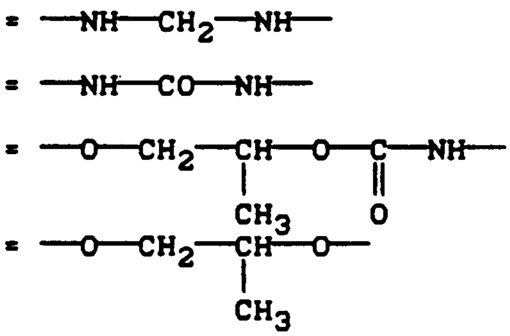

X = Cl, Br

(vergl. BE-A-696 010).

h) Allylverbindungen, wie Triallylcyanurat, Triallylphosphat, Allylalkohol, Allylamin.

i) Monoolefinisch ungesättigte aliphatische Kohlenwasserstoffe mit 2 bis 6 C-Atomen, wie Ethylen, Propylen, Butylen, Isobutylen.

j) Konjugierte Diolefine mit 4 bis 6 C-Atomen, wie Butadien, Isopren, 2,3-Dimethylbutadien, Chlorbutadien.

k) Ferner Norbornen und Hydroxymethylnorbornen.

Vorzugsweise werden eingesetzt:
Acryl- und Methacrylsäureester mit 1 bis 12 C-Atomen im Alkoholrest, Acrylsäure, Methacrylsäure sowie die $C_2$-$C_4$-Hydroxyalkylester dieser Säuren, Styrol, Acryl- und Methacrylnitril, Vinylacetat, Vinylpropionat, Vinylchlorid, Vinylidenchlorid, Ethylen oder Popylen in Verbindung mit einem oder mehreren der aufgeführten Monomeren.

Es ist besonders bevorzugt, bei der Durchführung des erfindungsgemäßen Verfahrens Monomerengemische zu verwenden, die alkoholische Hydroxylgruppen aufweisende Monomere der genannten Art in einer solchen Menge enthalten, daß die Monomerengemische 0,5 bis 8 Gew.-% an alkoholischen Hydroxylgruppen aufweisen. Besonders hochwertige erfindungsgemäße Dispersionen werden dann erhalten, wenn einerseits derartige, bevorzugte Monomerengemische verwendet werden und andererseits Art und Menge der erfindungswesentlichen Emulgatoren so bemessen werden, daß in den letztendlich erhaltenen erfindungsgemäßen Dispersionen auf jede Hydroxylgruppe der Polymerisate 0,1 bis 10 anionische Struktureinheiten der obengenannten Formel entfallen.

Die Polymerisation erfolgt im allgemeinen bei Temperaturen von 10 - 150 °C, vorzugsweise bei 40 - 130 °C.

Als Initatoren kommen im allgemeinen 0,05 - 5 Gew.-%, bezogen auf die Monomeren, in Radikale zerfallende Initatoren in Frage. Solche Initiatoren sind z.B. organische Peroxide, wie z. B. Lauroylperoxid, Cyclohexanonhydroperoxid, tert.-Butyl-peroctoat, tert.-Butyl-perpivalat, tert.-Butylperbenzoat, Dichlorbenzoylperoxid, Benzoylperoxid, Di-tert.-Butylperoxid, tert.-Butylhydroperoxid, Cumol-hydroperoxid, Peroxycarbonate, wie Di-iso-propyl-peroxydicarbonat, Dicyclohexyl-peroxidicarbonat, Diisooctyl-peroxidicarbonat, Sulfonylperoxide, wie Acetylcyclohexyl-sulfonylperacetat, Sulfonylhydrazide, Azoverbindungen, wie 4,4'-Azobis-(4-cyanpentancarbonsäure), Azodiisobuttersäuredinitril sowie wasserlösliche Azoverbindungen, wie sie z.B. in der DE-A-2 841 045 beschrieben sind.

Anorganische Peroxide, wie Wasserstoffperoxid, Kaliumperoxodisulfat und Ammoniumperoxodisulfat

sind ebenfalls geeignet.

Die in Radikale zerfallenden Initiatoren können allein oder auch in Verbindung mit Reduktionsmitteln oder Schwermetallverbindungen eingesetzt werden. Solche Verbindungen sind beispielsweise Natrium- oder Kaliumpyrosulfit, Ameisensäure, Ascorbinsäure, Thioharnstoff, Hydrazin- bzw. Aminderivate, Rongalit. Die Schwermetallverbindungen können sowohl in öllöslicher als auch in wasserlöslicher Form vorliegen. Wasserlösliche Schwermetallverbindungen sind beispielsweise Silbernitrat, Halogenide oder Sulfate des 2- oder 3-wertigen Eisens, Kobalts, Nickels, Salze des Titans oder Vanadins in niedrigeren Wertigkeitsstufen, Öllösliche Schwermetallverbindungen sind beispielsweise Kobaltnaphthenat oder die Acetylacetonkomplexe des Vanadins, Kobalts, Titans, Nickels oder des Eisens.

Die Polymerisation wird im allgemeinen bei pH-Werten von 5 - 10, vorzugsweise 6 bis 9, durchgeführt. Die Einstellung der pH-Werte innerhalb der genannten Bereiche erfolgt bei Anwesenheit von sauren Gruppen im Reaktionsgemisch oftmals durch die Zugabe von wäßrigen Ammoniak.

Zur Regulierung der Molekulargewichte der Polymeren können noch übliche Regler eingesetzt werden, z. B. n-Dodecylmercaptan, t-Dodecylmercaptan, Diisopropylxanthogendisulfid, Thioglykol und Thioglycerin. Sie werden im allgemeinen in Mengen von 0,1 - 2 Gew.-%, bezogen auf die Monomermischung zugegeben.

Die Emulsionspolymerisation im wäßrigen Medium kann nach bekannten Polymerisationsverfahren sowohl batchweise als auch kontinuierlich oder im Zulaufverfahren durchgeführt werden.

Besonders bevorzugt sind das kontinuierliche und das Zulaufverfahren. Bei letzterem wird unter Stickstoffatmosphäre Wasser zusammen mit einem Teil oder dem gesamten Emulgatorsystem und gegebenenfalls einem Teil des Monomergemisches vorgelegt, auf die Polymerisationstemperatur erhitzt und das Monomergemisch sowie der Initiator und gegebenenfalls Emulgator innerhalb von 0,5 - 10 Stunden, bevorzugt 1 - 6 Stunden, zugetropft.

Nach einiger Zeit wird nachaktiviert und die Reaktion bis zu einem Umsatz von ca. 99,0 % - 99,9 Gew.-% vervollständigt. Restmonomere sowie eventuell noch vorhandene organische Lösungsmittel können im Anschluß an die Emulsionspolymerisation evtl. mit dem vorliegenden Wasser oder einem Teil davon im Vakuum destillativ entfernt werden. Danach kann gegebenenfalls weiteres Wasser zugesetzt werden, so daß letztendlich als Verfahrensprodukte 10 -60 gew.-%ige, vorzugsweise 20 -50 gew.-%ige Dispersionen resultieren.

Die mittels Laser-Streulicht-Korrelationsspektroskopie gemessenen mittleren Teilchendurchmesser liegen je nach Reaktionsbedingungen zwischen 20 und 1.000 nm, vorzugsweise zwischen 50 und 500 nm. Dispersionen mit Teilchengrößen unter 50 nm erscheinen transparent, während solche mit größeren Teilchen zunehmend trüb erscheinen.

Die Dispersionen können mit gleichgeladenen Dispersionen abgemischt werden, wie z. B. mit Polyvinylacetat-, Polyethylen-, Polystyrol-, Polybutadien-, Polyvinylchlorid-und Polyacrylat-Dispersionen.

Schließlich können auch Füllstoffe, Weichmacher, Pigmente, Fluß- und Kieselsäuresole, Aluminium-, Ton-, Asbest-Dispersionen eingearbeitet werden.

Die erfindungsgemäßen Verfahrensprodukte stellen stabile, lager- und versandfähige wäßrige Dispersionen dar und können zu beliebig späterem Zeitpunkt formgebend verarbeitet werden. Sie trocknen im allgemeinen unmittelbar zu formstabilen Kunststoffüberzügen auf.

Falls bei der Durchführung des erfindungsgemäßen Verfahrens Monomere mit funktionellen Gruppen, insbesondere Hydroxyl- und/oder Carboxylgruppen mitverwendet worden sind, können den erfindungsgemäßen Verfahrensprodukten gewünschtenfalls auch noch weitere, vernetzend wirkende Substanzen einverleibt werden, um eine zusätzliche Hitzevernetzung und damit eine Beschleunigung der thermischen Aushärtung zu bewirken. Beispiele für derartige Zusatzmittel sind gegebenenfalls blockierte organische Polyisocyanate, organische Carbodiimide, Formaldehyd oder Formaldehyd-abspaltende Substanzen, Melaminharze oder Methylolverbindungen bzw. deren Ether.

Den erfindungsgemäßen Verfahrensprodukten können selbstverständlich auch noch andere aus der Lacktechnologie bekannte Zusatzstoffe wie beispielsweise Füllstoffe, Pigmente, Verlaufhilfsmittel, Entlüftungsmittel oder Lösungsmittel zugesetzt werden. Die erfindungsgemäßen Dispersionen können flüssige oder pastenartige Konsistenz aufweisen und sind ohne Emulgatorzusatz stabil, jedoch können entsprechende anionische oder neutrale Emulgatoren und Schutzkolloide sowie Verdickungsmittel im Laufe des Verfahrens zugefügt werden, wie ammoniakalisch aufgeschlossenes Kasein, Seifen, Invertseifen, Alkylsulfonate, Polyvinylalkohol, oxethylierte Phenole, Oleylalkoholpolyglykolether, oxethyliertes Polypropylenglykol oder Naturprodukte, wie Gelatine, Gummiarabicum, Tragant, Fischleim. Derartige Zusätze dienen vor allem der zusätzlichen Herabsetzung der Oberflächenspannung der wäßrigen Dispersionen. Sie beeinflussen weiterhin die Stabilität sowie die Koagulierbarkeit dieser Dispersionen.

Es sei jedoch betont, daß der Zusatz derartiger bei der Emulsionspolymerisation üblicher Emulgatoren im Rahmen des erfindungsgemäßen Verfahrens keineswegs notwendig ist.

Die nach dem erfindungsgemäßen Verfahren erhältlichen wäßrigen Dispersionen sind vielfältig anwendbar. So können Tauchartikel, nach dem Latex-Schaumschlagverfahren Schaumstoffe, durch Elektrolytzusatz zu den wäßrigen Dispersionen Koagulate, die auf der Mischwalze verarbeitet werden können, und durch Verdunsten des Wassers klebfreie und klebende Filme und Folien erhalten werden. Die Verfahrensprodukte sind zur Beschichtung bzw. zum Überziehen und zum Imprägnieren von gewebten und nichtgewebten Textilien, Leder, Papier, Holz, Metall, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z.B. für Kork- oder Holzmehl, Glasfasern, Asbest, Plastik- oder Gummiabfälle, keramische Materialien, als Hilfsmittel im Zeugdruck, als Zusatz zu Polymerisat-Dispersionen, als Schlichtemittel und zur Lederausrüstung geeignet.

Bevorzugt ist der Einsatz dieser Dispersionen für wäßrige, durch Hitzeeinwirkung selbstvernetzende Lacksysteme. Die Hitzevernetzung der erfindungsgemäßen Systeme erfolgt im allgemeinen innerhalb des Temperaturbereichs von 70 bis 170 °C, vorzugsweise 100 bis 150 °C. Besonders bevorzugt werden die erfindungsgemäßen Dispersionen daher zur Herstellung von Beschichtungen auf entsprechend hitzeresistenten Substraten verwendet.

In den nachfolgenden Beispielen beziehen sich alle Prozentangaben auf Gewichtsprozente.

## Beispiele

### Emulgator 1

Zu 297,5 g eines Polyesters des Molekulargewichts 1700 auf Basis von Adipinsäure und Hexandiol-1,6 und Neopentylglykol (Gewichtsverhältnis der Diole = 11:6) werden 639 g eines Biuretpolyisocyanats auf Basis von 1,6-Diisocyanato-hexan mit einem NCO-Gehalt von 23 % gegeben. Danach wird die Rektionsmischung 2 Stunden auf 120 °C aufgeheizt.

900 g des Umsetzungsproduktes (2,9 Mol NCO) werden bei 10 bis 20 °C zu einer Mischung aus 121,5 g (2,9 Mol) Cyanamid (mit 1 % $NaH_2PO_4$ stabilisiert) und 258 g (2,9 Mol) N,N-Dimethylaminoethanol in 260 ml Tetrahydrofuran gegeben, so daß die Temperatur 25 °C nicht übersteigt.

Bei 20 bis 25 °C wird die Reaktionsmischung noch 2 bis 4 Stunden nachgerührt, bis die Isocyanatbande im IR-Spektrum verschwunden ist. Anschließend wird das Polyisocyanat-Additionsprodukt in 900 ml Wasser gelöst. Das Tetrahydrofuran wird durch Einleiten von Stickstoff in die auf 60 bis 80 °C erhitzte wäßrige Lösung ausgetrieben. Die dann zurückbleibende wäßrige Lösung weist einen Feststoffgehalt von 50 % auf, bestimmt durch Verdampfen des Wassers bei 180 °C.

Emulgator 1 weist ein rechnerisches Molekulargewicht von ca. 2200 und einen Gehalt an Struktureinheiten der Formel $-NH-CO-N^{\ominus}-C{\equiv}N$ von 227 Milliäquivalenten pro 100 g Feststoff auf.

### Emulgator 2

Zu 212,5 g eines Polyesters des Molekulargewichts 1700 auf Basis von Adipinsäure und Hexandiol-1,6 und Neopentylglykol (Gewichtsverhältnis der Diole = 11:6) werden 500 g eines Trimerisats auf Basis von 1,6-Diisocyanato-hexan mit einem NCO-Gehalt von 21 % gegeben. Danach wird die Reaktionsmischung 2 Stunden auf 120 °C aufgeheizt.

Die Reaktionsmischung wird auf 70 °C abgekühlt. Nach der Zugabe von 96,3 g Trimethylolpropandiallylether wird bei 70 °C noch 2 Stunden nachgerührt.

750 g des Umsetzungsproduktes (1,7 Mol NCO) werden bei 10 bis 20 °C zu einer Mischung aus 71,2 g (1,7 Mol) Cyanamid (mit 1 % $NaH_2PO_4$ stabilisiert) und 151,3 g (1,7 Mol) N,N-Dimethylaminoethanol in 150 ml Aceton gegeben, so daß die Temperatur 25 °C nicht übersteigt.

Bei 20 bis 25 °C wird die Reaktionsmischung noch 2 bis 4 Stunden nachgerührt, bis die Isocyanatbande im IR-Spektrum verschwunden ist. Anschließend wird das Polyisocyanat-Additionsprodukt in 975 ml Wasser gelöst. Das Aceton wird durch Einleiten von Stickstoff in die auf 60 °C erhitzte wäßrige Lösung ausgetrieben. Die dann zurückbleibende wäßrige Lösung weist einen Feststoffgehalt von 44,4 % auf, bestimmt durch Verdampfen des Wassers bei 180 °C.

Emulgator 2 weist ein rechnerisches Molekulargewicht von ca. 2500 und einen Gehalt an Struktureinheiten der Formel $-NH-CO-N^{\ominus}-C{\equiv}N$ von 175 Milliäquivalenten pro 100 g Feststoff auf.

### Erfindungsgemäßes Verfahren

Beispiel 1

In einem 2 l-Vierhalskolben mit wirksamem Rührer, Rückflußkühler, Gaseinlaß und -auslaß werden 460 g entionisiertes Wasser vorgelegt. Danach wird unter Stickstoffatmosphäre gründlich ausgekocht und auf 60 °C abgekühlt. Danach werden 350 g der 50 gew.-%igen wäßrigen Lösung des Emulgators 1 zur Vorlage hinzugegeben und anschließend Stickstoff übergeleitet.

Danach wird eine Mischung von 8 g Methacrylsäuremethylester und 8 g Acrylsäure-n-butylester (Monomergemisch I) gleichzeitig mit 10,4 g einer 2 gew.-%igen wäßrigen ammoniakalischen Lösung des Initiators 4,4′-Azobis-(4-cyanpentancarbonsäure) (Initiatorlösung I) schnell zudosiert. Nach einer Reaktionszeit von 30 Minuten werden gleichzeitig, aber getrennt innerhalb von 3 Stunden eine Monomermischung von 80 g Methacrylsäuremethylester und 80 g Acrylsäure-n-butylester (Monomermischung II) sowie 102 g einer 1 gew.-%igen wäßrigen ammoniakalischen Lösung von 4,4′-Azobis-(4-cyanpentancarbonsäure) (Initiatorlösung II) zudosiert. Nach einer zusätzlichen Reaktionszeit von 2 Stunden wird mit 10,4 g einer 3 gew.-%igen wäßrigen ammoniakalischen Lösung desselben Initiators nachaktiviert. Danach wird noch weitere 5 Stunden auspolymerisiert. Anschließend werden im Wasserstrahlvakuum ca. 100 ml Wasser und Restmonomere abdestilliert und durch 100 ml entionisiertes Wasser ersetzt. Die Konzentration der wäßrigen Dispersion beträgt 33,9 Gew.-%, der pH-Wert 8,0 und der mittlere Teilchendurchmesser (gemessen mittels Laserstreulicht-Korrelationsspektroskopie) 84 ± 1 nm. Es wurde kein Koagulat gefunden. Das Gewichtsverhältnis von eingesetzten Monomeren zu Emulgator (Feststoff) liegt bei 1:1.

Beispiele 2 und 3

Es wird wie in Beispiel 1 verfahren, mit dem Unterschied, daß in den Beispielen 2 und 3 das Gewichtsverhältnis Monomere : Emulgator auf 6:4 bzw. 7:3 heraufgesetzt wird. Nähere Angaben sind in Tabelle 1 aufgelistet; zusätzlich aufgeführt sind die physikalischchemischen Kenndaten der wäßrigen Dispersionen.

Tabelle 1

| Vorlage | Bsp. 2 | Bsp. 3 |
|---|---|---|
| entionisiertes Wasser (g) | 510 | 545 |
| Emulgator 1 (50 %) (g) | 280 | 210 |
| Monomergemisch I | | |
| Methacrylsäuremethylester (g) | 10 | 12 |
| Acrylsäure-n-butylester (g) | 10 | 12 |
| Initiatorlösung I | | |
| 4,4′-Azobis-(4-cyanpentancarbonsäure) (g) | 0,2 | 0,2 |
| 0,5 %ige wäßrige Lösung von Ammoniak (g) | 10,2 | 10,2 |
| Monomergemisch II | | |
| Methacrylsäuremethylester (g) | 95 | 111 |
| Acrylsäure-n-butylester (g) | 95 | 111 |
| Initiatorlösung II | | |
| 4,4′-Azobis-(4-cyanpentancarbonsäure) (g) | 1 | 1 |
| 0,25 %ige wäßrige Lösung von Ammoniak (g) | 101 | 101 |
| Nachaktivatorlösung | | |
| 4,4′-Azobis-(4-cyanpentancarbonsäure) (g) | 0,3 | 0,3 |
| 0,75 %ige wäßrige Lösung von Ammoniak (g) | 10,3 | 10,3 |
| Konzentration (Gew.-%) | 34,6 | 30,6 |
| pH-Wert | 7,6 | 7,4 |
| mittlerer Teilchendurchmesser (nm) | 121 ± 2 | 181 ± 3 |
| Koagulat | - | - |

Beispiel 4

In einem 2 l-Dreihalsrührkolben mit wirksamem Rührer, Rückflußkühler, Gaseinlaß und -auslaß werden 412 g entionisiertes Wasser vorgelegt. Danach wird unter Stickstoffatmosphäre gründlich ausgekocht und auf 60 °C abgekühlt.

Danach werden 288 g der 50 gew.-%igen wäßrigen Lösung des Emulgators 1 zur Vorlage hinzugegeben und anschließend Stickstoff übergeleitet.

Innerhalb von 4 Stunden werden gleichzeitig aber getrennt eine Monomermischung aus 130 g Styrol, 130 g Methacrylsäuremethylester, 29 g Acrylsäure-n-butylester, 38 g Methacrylsäurehydroxypropylester und 10 g Methacrylsäure sowie eine Initiatorlösung von 1,5 g 4,4′-Azobis-(4-cyanpentancarbonsäure) und 10,5 g N-Dimethylaminoethanol in 150 g entionisiertem Wasser zudosiert. Anschließend wird 2 Stunden nachgerührt und danach mit einer Initiatorlösung von 0,3 g 4,4′-Azobis-(4-cyanpentancarbonsäure) und 0,13 g N-Dimethylaminoethanol in 10 g entionisiertem Wasser nachaktiviert. Danach wird noch weitere 5 Stunden auspolymerisiert. Bei einem Vakuum von ca. 100 mbar werden ca. 100 ml Wasser und Restmonomere abdestilliert und durch 100 ml entionisiertes Wasser ersetzt. Die Konzentration der wäßrigen Dispersion beträgt 41,4 Gew.-%, der pH-Wert 7,5 und der mittlere Teilchendurchmesser (gemessen mittels Laserstreulicht-Korrelationsspektroskopie) liegt bei 112 ± 3 nm. Die getrocknete Koagulatmenge, die vorher mit einem Polyamidfilter der Maschenweite 100 µm von der restlichen Dispersion getrennt wurde, betrug 7 g. Das Gewichtsverhältnis Monomere : Emulgator liegt in diesem Beispiel bei 7:3.

Beispiel 5

Nach dem im Beispiel 4 beschriebenen Verfahren wird unter sonst gleichen Bedingungen eine Monomermischung aus 89,5 g Styrol, 89,5 g Methacrylsäuremethylester, 29 g Acrylsäure-n-butylester, 119 g Methacrylsäurehydroxypropylester und 10 g Methacrylsäure eingesetzt und polymerisiert. Die Konzentration der erhaltenen wäßrigen Dispersion beträgt 40,3 Gew.-%, der pH-Wert liegt bei 7,3 und der mittlere Teilchendurchmesser bei 167 nm. Es wurde 10 g getrocknetes Koagulat gefunden. Gewichtsverhältnis Monomere : Emulgator = 7:3.

Beispiel 6

In einem 500 ml-Dreihalskolben mit Rührer, Rückflußkühler, Thermometer sowie Gaseinlaß und -auslaß werden 107 g entionisiertes Wasser vorgelegt. Danach wird unter Stickstoffatmosphäre gründlich ausgekocht und auf 50 °C abgekühlt. Daraufhin werden 48 g der 50 gew.-%igen wäßrigen Lösung des Emulgators 1 zur Vorlage hinzugegeben und anschließend Stickstoff übergeleitet. Innerhalb von drei Stunden werden gleichzeitig aber getrennt eine Monomermischung aus 28 g Acrylnitril und 28 g Acrylsäure-n-butylester, eine Initiatorlösung von 0,2 g Ammoniumperoxodisulfat und 4,2 g N-Dimethylaminoethanol in 15 g destilliertem Wasser sowie eine Aktivatorlösung von 0,04 g des Dihydrats des Natriumhydroxymethansulfinats (Rongalit C®) in 15 g destilliertem Wasser zur Vorlage zudosiert (Gewichtsverhältnis Monomere : Emulgator = 7:3). Danach wird 3 Stunden bei 50 °C nachgerührt und sodann folgende Lösungen getrennt zur Nachaktivierung zudosiert:

a) 0,03 g Ammoniumperoxodisulfat in 1 g destilliertem Wasser;
b) 0,07 g Rongalit C® in 1 g destilliertem Wasser.

Anschließend wird 5 Stunden bei 50 °C nachgerührt. Bei einem Vakuum von ca. 100 mbar werden 10 ml Wasser und Restmonomere abdestilliert und anschließend dem Kolbeninhalt wieder 10 ml destilliertes Wasser zugefügt.

Die Dispersion wird dann durch ein Polyamidtuch mit einer Maschenweite von 100 µm filtriert.

Die Konzentration der wäßrigen Dispersion beträgt 30,3 Gew.-%, der pH-Wert liegt bei 7,6 und der mittlere Teilchendurchmesser bei 109 ± 1 nm. Die getrocknete Koagulatmenge betrug 0,1 g. Von dieser Dispersion wird mit einem Rakel ein 0,5 mm dicker Flüssigkeitsfilm auf eine entfettete Glasplatte ausgezogen und 48 Stunden an der Luft getrocknet. Danach wird der Polymerfilm bei 140 °C 30 Minuten lang vernetzt. Durch Aufbringen eines Wassertropfens auf die Filmoberfläche wird die Wasserfestigkeit getestet. Erst nach ca. 1 Stunde wurde eine geringe Eintrübung des Polymerfilms beobachtet.

Beispiel 7

Nach dem Verfahren von Beispiel 6 wird eine Monomermischung von 16,8 g Acrylnitril und 39,2 g Acrylsäure-n-butylester eingesetzt und polymerisiert (Gewichtsverhältnis Monomere : Emulgator = 7:3).

Die Konzentration der wäßrigen, koagulatfreien Dispersion beträgt 30,9 Gew.-%, der pH-Wert liegt bei 7,4 und der mittlere Teilchendurchmesser bei 333 ± 5 nm. Bei der "Wassertropfenprobe" wird eine Trübung erst nach ca. 3 Stunden beobachtet.

Beispiel 8

Nach dem Verfahren von Beispiel 6 werden 54 g der 44,4 gew.-%igen Emulgatorlösung 2 in 97 g destilliertem Wasser vorgelegt und hierzu eine Monomermischung aus 28 g Styrol und 28 g Acrylsäure-n-butylester zudosiert und unter denselben Bedingungen wie unter 6 polymerisiert (Gewichtsverhältnis Monomere : Emulgator = 7:3).

Die wäßrige Dispersion ist koagulatfrei, besitzt eine Konzentration von 30,2 Gew.-%, einen pH-Wert von 7,7 und einen mittleren Teilchendurchmesser von 208 ± 3 nm. Bei der "Wassertropfenprobe" wird eine Trübung erst nach ca. 3 Stunden beobachtet.

Beispiel 9

Nach dem Verfahren von Beispiel 8 wird eine Monomermischung aus 16,8 g Styrol und 39,2 g Acrylsäure-n-butylester eingesetzt und polymerisiert (Gewichtsverhältnis Monomere : Emulgator = 7:3).

Die wäßrige Dispersion ist koagulatfrei, besitzt eine Konzentration von 29,9 Gew.-%, einen pH-Wert von 7,6 und einen mittleren Teilchendurchmesser von 188 ± 2 nm.

Bei der "Wassertropfenprobe" wird eine Trübung erst nach ca. 3 Stunden beobachtet.

Beispiele 10 und 11 (erfindungsgemäße Verwendung)

Unter Verwendung der gemäß Beispiel 4 bzw. 5 hergestellten erfindungsgemäßen Dispersionen werden in den nachfolgenden Verwendungsbeispielen 10 und 11 gebrauchsfertige Beschichtungsmittel hergestellt:

| | Bsp. 10 | Bsp. 11 | |
|---|---|---|---|
| Beispiel 4, 41,4 %ig in Wasser | 87,0 | - | % |
| Beispiel 5, 40,3 %ig in Wasser | - | 87,2 | % |
| Tensid[1], 10 %ig in Wasser | 2,6 | 2,6 | % |
| Verlaufmittel[2], 50 %ige Lieferform | 1,3 | 1,3 | % |
| Entlüftungsmittel[3], 32 %ige Lieferform | 0,9 | 0,9 | % |
| Ethyldiglykol | 4,1 | 4,0 | % |
| Butyldiglykol | 4,1 | 4,0 | % |
| Festgehalt | 37,2 | 36,4 | % |
| Auslaufzeit (DIN 53 211, 4 mm-Becher) | 16 | 19 | s |
| pH-Wert | 8,7 | 8,4 | |

[1] Fluortensid FT 929, Handelsprodukt der Bayer AG
[2] ®Byk 301, Handelsprodukt der Byk-Chemie GmbH
[3] ®Additol XW 393, Handelsprodukt der Hoechst AG

Unter Verwendung der genannten Beschichtungsmittel werden Prüfbleche beschichtet. Nach einer Ablüftzeit bei Raumtemperature von 5 Minuten wird während 15 Minuten bei 80 °C vorgetrocknet und anschließend 20 Minuten bei 140 °C eingebrannt. Es resultieren klare Beschichtungen mit einwandfreiem Verlauf, hoher Brillanz, hervorragenden mechanischen Filmeigenschaften und guten chemischen Beständigkeiten.

| | Bsp. 10 | Bsp. 11 | |
|---|---|---|---|
| Schichtstärke | 40 | 45 | µm |
| Pendelhärte (DIN 53 157) | 169 | 180 | s |
| Erichsentiefung (DIN 53 156) | 10,5 | 10,5 | mm |
| Wasserbeständigkeit, 24 Std. Belastung | unverändert | unverändert | |
| Ethanolbeständigkeit, 10 min Belastung | unverändert | unverändert | |
| Xylolbeständigkeit, 10 min Belastung | unverändert | unverändert | |

## Patentansprüche

**1.** Verfahren zur Herstellung von wäßrigen Dispersionen von Polymerisaten durch Polymerisation von olefinisch ungesättigten Monomerer in wäßrigem Medium in Gegenwart von Radikalbildnern und Emulgatoren, dadurch gekennzeichnet, daß man als Emulgatoren Polyisocyanat-Additionsprodukte eines unter 20 000 liegenden Molekulargewichts verwendet, die mehr als 5 und bis 1000 Milliäquivalente pro 100 g Feststoff an eingebauten anionischen Struktureinheiten der Formel

$$-NH-CO-\overset{\ominus}{N}-C\equiv N$$

enthalten.

**2.** Verfahren gemäß Anspruch 1, dadurch gekennzeichnet, daß das Gewichtsverhältnis der olefinisch ungesättigten Monomeren zu den Emulgatoren bei 0,1:1 bis 20:1 liegt.

**3.** Verfahren gemäß Anspruch 1 und 2, dadurch gekennzeichnet, daß man als olefinisch ungesättigte Monomere ein Gemisch verwendet, welches alkoholische Hydroxylgruppen aufweisende Monomere in einer solchen Menge enthält, daß das Gemisch 0,5 bis 8 Gew.-% alkoholische Hydroxylgruppen aufweist.

**4.** Verfahren gemäß Anspruch 1 bis 3, dadurch gekennzeichnet, daß man als Emulgatoren Oligourethane des Molekulargewichtsbereichs 500 bis 10 000 verwendet, die pro Molekül mindestens zwei eingebaute anionische Struktureinheiten der in Anspruch 1 genannten Formel enthalten.

**5.** Gemäß Anspruch 1 bis 4 erhältliche Dispersionen.

**6.** Verwendung der gemäß Anspruch 1 bis 5 erhältlichen Dispersionen zur Herstellung von Beschichtungen auf beliebigen Hitze-resistenten Substraten.

## Claims

**1.** A process for the production of aqueous dispersions of polymers by polymerization of olefinically unsaturated monomers in aqueous medium in the presence of radical formers and emulsifiers, characterized in that polyisocyanate addition products having a molecular weight below 20,000 which contain more than 5 and up to 1,000 milliequivalents per 100 g solids of incorporated anionic structural units corresponding to the formula

$$-NH-CO-\overset{\ominus}{N}-C\equiv N$$

are used as the emulsifiers.

**2.** A process as claimed in claim 1, characterized in that the ratio by weight of the olefinically unsaturated monomers to the emulsifiers is 0.1:1 to 20:1.

**3.** A process as claimed in claims 1 and 2, characterized in that a mixture containing monomers bearing alcoholic hydroxyl groups in such a quantity that the mixture contains 0.5 to 8% by weight alcoholic hydroxyl groups is used as the olefinically unsaturated monomer.

**4.** A process as claimed in claims 1 to 3, characterized in that oligourethanes having a molecular weight in the range from 500 to 10,000 which contain at least two incorporated anionic structural units corresponding to the formula in claim 1 per molecule are used as the emulsifiers.

**5.** Dispersions obtainable by the process claimed in claims 1 to 4.

**6.** The use of the dispersions obtainable by the process claimed in claims 1 to 5 for the production of coatings on heat-resistant substrates.

**Revendications**

**1.** Procédé de préparation de dispersions aqueuses de polymères par polymérisation de monomères à insaturation oléfinique en milieu aqueux en présence d'agents formateurs de radicaux et d'émulsionnants, caractérisé en ce qu'on utilise, comme émulsionnants, des produits d'addition de polyisocyanates de poids moléculaire inférieur à 20 000, qui contiennent plus de 5 et jusqu'a 1000 milliéquivalents, pour 100 g de substance solide, d'unités structurales anioniques incorporées de formule

$$-NH-CO-\overset{\ominus}{N}-C\equiv N$$

**2.** Procédé selon la revendication 1, caractérisé en ce que le rapport en poids des monomères à insaturation oléfinique aux émulsionnants se situe entre 0,1:1 et 20:1.

**3.** Procédé selon les revendications 1 et 2, caractérisé en ce qu'on utilise, comme monomères à insaturation oléfinique, un mélange qui contient des monomères comportant des groupes hydroxyle alcooliques, en une quantité telle que le mélange comprenne de 0,5 à 8 % en poids de groupes hydroxyle alcooliques.

**4.** Procédé selon les revendications 1 à 3, caractérisé en ce qu'on utilise, comme émulsionnants, des oligouréthannes de poids moléculaire compris entre 500 et 10 000, qui contiennent au moins 2 unités structurales anioniques incorporées de la formule donnée dans la revendication 1.

**5.** Dispersions pouvant être obtenues selon les revendications 1 à 4.

**6.** Application des dispersions pouvant être obtenues selon les revendications 1 à 5 à la préparation de revêtements sur des substrats thermorésistants quelconques.